# EUROPEAN PATENT APPLICATION

(11) **EP 1 535 958 A1**
(43) Date of publication of application: **01.06.2005**
(21) Application number: 04027021.7
(22) Date of filing: 13.11.2004
(51) Int. Cl.: C08K 3/22, C09D 5/00, C08J 5/18

(54) **Plastisol coating containing reflective pigments, method of prepairing coating on a substrate, and products with such coatings**

(30) Priority: 25.11.2003 US 723898
(71) Applicant: BASF CORPORATION, Southfield, MI 48034-2442 (US)
(72) Inventor: Mead, David H., Brunckswick, Ohio 44212 (US); Rogers, David Montgomery, Eva, Alabama 35621 (US)
(74) Representative: Hüsener, Susanne

(57) **Abstract**

A poly(vinyl chloride) (PVC) based plastisol composition including a poly(vinyl chloride) polymer (homopolymer or copolymer), a plasticizer, and an infrared-reflective pigment is applied in a layer on a substrate and coalesced to produce a PVC layer including an infrared reflective pigment. The layer can be made into a free film and applied to an extruded vinyl or metal sheet to prepare vinyl or metal siding or trim pieces with an outer layer of the PVC including an infrared-reflective pigment.

## Description

### FIELD OF THE INVENTION

This invention is related to PVC plastisol coatings. In another aspect, this invention concerns methods of applying coatings to a substrate. In yet another aspect, this invention concerns products, particularly architectural siding products, having a plastisol coating layer thereon.

### BACKGROUND OF THE INVENTION

Vinyl siding is a durable, easy-to-clean alternative to wood or aluminum siding for buildings. It may be produced in a variety of shapes and colors by known extrusion and molding processes at a relatively low cost per sheet or panel. It is important for building walls to provide a high degree of thermal insulation to a building in cold climates. It is known to provide one or more layers or panels of insulating material between the siding and the building structure to enhance the thermal insulation of building structures. For instance, large sheets of insulating material may be attached to the building structure before the siding. Using insulating material under the vinyl siding, while generally effective, does not insulate perfectly and does not provide any protection to the vinyl siding itself.

Zabrocki et al., U.S. Patent 5,306,548 described coextruding a two-layer film with an outer layer of a weatherable polymer such as a rubber-modified styrene/acrylonitrile and an inner layer of a UV-stabilized polymer such as chlorinated polyethylene for lamination to a substrate such as vinyl siding. The film is said to improve the durability of the vinyl siding, but would not be expected to significantly affect the thermal insulative properties of the siding.

Blonski et al., U.S. 6,454,848, describes solid solutions of a host component with a corundum-hematite crystalline structure and a guest component of one or more of elements that can be used as near infrared reflecting pigments. The patentees disclose that such pigments would be suitable for use in architectural applications such as vinyl siding, where increased near infrared reflectance would result in lower heat build-up and thus lower energy costs. Incorporating a sufficient amount of pigment in the vinyl siding for the desired effect, however, would add significant expense to the product and could have an effect on the tensile properties of the siding. Furthermore, the concentration of near infrared reflecting pigments needed for the desired surface reflectance could interfere with obtaining other properties needed for the siding.

A need remains, therefore, for effective building thermal insulation materials and methods for improving building insulation that do not add undue expense in constructing or refurbishing a building.

### SUMMARY OF THE INVENTION

The present invention provides a poly(vinyl chloride) (PVC) plastisol including a poly(vinyl chloride) polymer (homopolymer or copolymer), at least one plasticizer, and an infrared-reflective pigment. "Poly(vinyl chloride) polymer" is used herein to refer to both homopolymers and copolymers of vinyl chloride. The poly(vinyl chloride) polymer is selected to have excellent adhesion to the siding substrate, which may be, e.g. rigid PVC base stock or primed metal such as aluminum or steel, and to have excellent outdoor weathering characteristics.

The invention further provides a coating layer prepared by applying a layer of the PVC plastisol of the invention to a substrate and coalescing the applied layer to produce a PVC layer including an infrared reflective pigment. The invention also provides for preparing such a coating layer on a treated paper web and removing the coating layer from the paper backing to produce a free film of a flexible PVC film including an infrared reflective pigment. The invention still further provides for laminating the free, flexible PVC film including an infrared reflective pigment to a substrate and, optionally, forming the laminated substrate to a desired profile.

In another aspect, the invention provides a method of making an article of architectural siding or trim comprising steps of extruding a vinyl polymer, particularly a rigid PVC-based composition, into a sheet and applying the flexible PVC film including an infrared reflective pigment to the extruded sheet when the sheet is at a temperature of from about 370°F to about 430°F to produce a laminated sheet. The method may include various further steps and modifications, such as applying the PVC film with a pressing roller and forming the laminated sheet into a desired form or profile in one or more steps.

Still further, the invention provides a method of making an article of architectural siding or trim including applying the flexible PVC film including an infrared reflective pigment to sheet metal, particular, steel or aluminum sheet metal, either when the sheet is at a temperature of from about 370°F to about 430°F or when the sheet is at a lower temperature and then heating the sheet to from about 370°F to about 430°F to produce a laminated sheet. The method may include various further steps and modifications, such as applying the PVC film with a pressing roller and forming the laminated sheet into a desired form or profile in one or more steps.

In still another aspect, the invention provides an article having thereon a layer of a plasticized poly(vinyl chloride) polymer, the layer further including an infrared reflective pigment. In a preferred embodiment the article is a piece of vinyl siding or a trim piece for vinyl siding and the layer is an outer layer from about 2 mils to about 5 mils thick.

In yet a further aspect, the invention provides a method of protecting a building by applying articles of architectural siding and/or trim of the invention to the exterior of the building, having the laminated PVC film including an infrared reflective pigment on the exterior side of the siding.

### DETAILED DESCRIPTION OF THE PREFERRED EMBODIMENTS

The following description of the preferred embodiment(s) is merely exemplary in nature and is in no way intended to limit the invention, its application, or uses.

The plastisol coating composition includes a poly(vinyl chloride) polymer, a plasticizer, and an infrared-reflective pigment. The plastisol coating preferably contains not more than about 15% by weight solvent. The composition may further include a secondary plasticizer.

The poly(vinyl chloride) polymer preferably has a weight average molecular weight ranging from about 60,000 to about 200,000. In one embodiment, the poly(vinyl chloride) polymer is a poly(vinyl chloride) homopolymer. The poly(vinyl chloride) polymer may also be a copolymer of vinyl chloride with one or more co-monomers. Examples of poly(vinyl chloride) copolymers that may be used include copolymers of vinyl chloride with one or more co-monomers selected from the group consisting of vinylidene chloride, esters of alkenoic acids having 3 to 6 carbon atoms and alkanols having 2 to 6 carbon atoms such as acrylic acid esters and methacrylic acid esters, vinyl esters such as vinyl acetate, vinyl propionate and vinyl esters of higher fatty acids, styrene and other aromatic vinyl compounds, acrylonitrile, ethylene, propylene, and alkenedioic acids and polymerizable derivatives thereof such as maleic acid, itaconic acid, fumaric acid, anhydrides and esters like diethyl maleate, monobutyl fumarate, and maleic anhydride. If co-monomers are used, they are selected and apportioned to provide or maintain desired properties of the laminate coating layer, e.g. resistance to degradation by ultraviolet light, coefficient of expansion compatible with the substrate, and so on.

The plastisol coating further includes a plasticizer, preferably one or more plasticizers selected from phthalates, azelates, butyrates, and epoxy plasticizers, such as diesters of phthalic acid, azelaic acid, and/or butyric acid with alkanols having 1 to 18 carbon atoms or with cycloalkanols having 5 to 7 carbon atoms such as dibutyl phthalate, dicyclohexyl phthalate, di-methylcyclohexyl phthalate, dioctyl phthalate, di-isodecyl phthalate, dibutyl azelate, dicyclohexyl azelate, di-methylcyclohexyl azelate, dioctyl azelate, di-isodecyl azelate, 2,2,4-trimethyl-1,3-pentanediol monoisobutyrate, or mixed esters of phthalic acid with said alcohols such as octyl decyl phthalate. Plasticizers having from about 25 to about 30 carbon atoms are preferred. In a preferred embodiment the plastisol contains a combination of diisodecyl phthalate and dioctyl azelate.

A secondary plasticizer is preferably included to aid in reducing the plastisol viscosity without using excess solvent. Such a plasticizer should be selected to be a liquid, low viscosity plasticizer to behave as a diluent and/or to improve coating composition application rheology. The secondary plasticizer may also be used to enhance flexibility of the coating film. The amount of second plasticizer should be chosen to avoid exudation, migration, and marring. Examples of such plasticizers include, without limitation, 2,2,4-trimethyl-1,3-pentanediol monoisobutyrate, odorless mineral spirits, low molecular weight phthalate esters, low molecular weight azelate esters, low molecular weight adipate esters, and combinations of these. The amount of secondary plasticizer included will depend upon factors such as how much solvent may be incorporated into the plastisol, the desired application viscosity of the plastisol, and the viscosity-reducing power of the selected secondary plasticizer(s).

The plastisol coating composition includes an infrared-reflective pigment. Examples of suitable infrared-reflective pigments include those described in Lotsch, U.S. 4,311,527 described as having high infrared reflectance, and in Blonski et al., U.S. 6,454,848, described as solid solutions of a host component with a corundum-hematite crystalline structure and a guest component of one or more of the elements aluminum, antimony, bismuth, boron, chrome, cobalt, gallium, indium, iron, lanthanum, lithium, magnesium, manganese, molybdenum, neodymium, nickel, niobium, silicon, tin, titanium, vanadium, and zinc. Infrared-reflective pigment are available from BASF Corporation, Mount Olive, NJ; Ferro Corporation, Cleveland, OH; and The Shephard Color Company, Cincinnati, OH.

The plastisol coating composition may include more than one infrared-reflective pigment and may include other, non-infrared-reflective pigments. The infrared reflective pigment or pigments and optional further pigments are preferably dispersed in a portion of the primary plasticizer before being incorporated into the plastisol coating composition, using appropriate pigment dispersion equipment such as a sandmill or attritor.

In a preferred embodiment, a sufficient amount of the infrared-reflective pigment is included in the plastisol coating composition so that there is essentially no transmittance of light of near infrared wavelength through a coating layer of the desired thickness formed from the plastisol coating composition.

An organic solvent may be included at not more than about 15% by weight of the plastisol coating composition to provide a desired viscosity.

A coating layer is prepared on a substrate by applying a layer of the PVC plastisol of the invention to a substrate and coalescing the applied layer to produce a coating layer of PVC including an infrared reflective pigment. The PVC plastisol may be applied to the substrate by any suitable coating method, including knife coating, and roller coating. The applied plastisol coating is fused into a film with heat. In one embodiment, the applied plastisol layer is baked at a temperature in the range of about 350°F to about 430°F, preferably in the range from about 390°F to about 400°F for a minute or more to drive off the volatile components and fuse the film. The coating layer is preferably from about 1 mil to about 20 mils thick, more preferably from about 2 mils to about 5 mils thick.

The coating layer may be formed on a desired substrate. In one embodiment, a coating layer is formed on a web or roll of treated paper or other backing material. The coated paper web may be cut to appropriate dimensions for lamination to the desired article, preferably vinyl siding, and the coating layer is then removed from the paper backing to produce a free PVC film including an infrared reflective pigment. The free film is laminated onto a metal or plastic substrate to produce a coated article, preferably an article of vinyl siding.

A laminated vinyl siding article is made by extruding a molten PVC polymer composition into a sheet and applying the PVC film including an infrared reflective pigment to the extruded sheet, e.g. by pressing the two together at a nip between two rollers, when the sheet is at a temperature in the range from about 370°F to about 450°F, preferably from about 380°F to about 420°F, to produce a laminated sheet. It is preferred to apply the PVC with a pressing roller to assure good contact between the film and the sheet at all points. The pressing roller should be made from a material, such as a synthetic rubber, that will not damage the film and can tolerate the application temperatures for prolonged periods of time. The laminated sheet is then formed into an article of architectural vinyl siding or trim piece of a desired profile, having the laminated film on the outer edge so that when the article of vinyl siding is attached to a building the laminated film layer containing the infrared reflective pigment will be to the outside. It is preferred for the article of vinyl siding or trim piece to have an outer layer of coating film containing the infrared reflective pigment, with the coating layer being from about 2 mils to about 5 mils thick.

The invention is further described in the following example. The examples are merely illustrative and do not in any way limit the scope of the invention as described and claimed. All parts are parts by weight unless otherwise noted.

### Examples

### Preparation A. Unpigmented PVC Dispersion.

An unpigmented PVC plastisol was prepared by combining, in order and with agitation, 4.6 parts by weight KODAFLEX TXIB Plasticizer (obtained from Eastman Chemicals, Kingsport TN), 5.05 parts by weight JAYFLEX DIDP (obtained from ExxonMobil, Houston, TX), 1.5 parts by weight Aromatic 150, 0.6 parts by weight TEXANOL (obtained from Eastman Chemicals, Kingsport, TN), 7.6 parts by weight PLASTOLEIN 9058 (obtained from Cognis, IN), 4.7 parts by weight of a heat stabilizer, and 2.25 parts by weight of an epoxy resin having an epoxy equivalent weight in the range of 185-192. Mixing was continued until the dispersion was uniform. The mixture was then cooled to under 100°F and 50.25 parts by weight FORMOLON 38 (obtained from Formosa Plastics Corp. Delaware City, DE) and 23.45 parts by weight VC 260SS PVC homopolymer (obtained from Borden, now acquired by Formosa Plastics Corp. Illiopolis, IL) were added slowly and with agitation, keeping the temperature under 100°F. Mixing was continued until the added materials were well dispersed.

Preparation B. Dispersion of Infrared-Reflective Black Pigment

A premix for grinding was prepared by mixing together 11.8941 parts by weight JAYFLEX DIDP, 3.68 parts by weight a wetting agent, 2.808 parts by weight heat stabilizer, 7.3901 parts by weight calcium carbonate, 3.074 parts by weight antimony trioxide, and 35.4714 parts by weight BLACK 411 (obtained from Shephard, Cincinnati, OH.). The premix was passed through a sandmill to a grind fineness of 7+ on a Hegman grind gauge. Then, 35.6824 parts by weight JAYFLEX DIDP was added to the pigment dispersion.

### Example 1. Plastisol Coating Composition According to the Invention

A brown coating composition was prepared by thoroughly mixing 72.907 parts by weight of the Preparation A. unpigmented PVC dispersion and 14.579 parts by weight of the Preparation B dispersion of infrared-reflective black pigment, then tinting the mixture with 2.703 parts by weight of a white pigment dispersion, 4.208 parts by weight of a yellow pigment dispersion, and 1.946 parts by weight of a red pigment dispersion. Additional small tints with the black, yellow, red, and white pigment dispersions were made to obtain the desired shade of brown. Finally Aromatic 150 was added to obtain a desired viscosity.

### Example 2. Preparation of Coating Film

The coating composition of Example 1 was roll coated in a knife over roll application and fused at approximately 390°F, then cut to the desired width to prepare a roll of film approximately 3 mils (76 microns) thick. The UV transmittance of the film was tested at various wavelengths, with the following results:

| wavelength (nm) | UV transmittance (percent) |
|---|---|
| 280 | 0.03 |
| 300 | 0.086 |
| 320 | 0.008 |
| 340 | 0.222 |
| 360 | 0.076 |
| 380 | 0.005 |
| 400 | 0.0155 |

### Example 3. Preparation of Siding Article

Film from the roll of film of Example 2 was laminated, with heat and pressure, to a base stock of rigid PVC siding material. The laminated siding material was then formed and embossed to the desired profile to produce the laminated siding article.

The description of the invention is merely exemplary in nature and, thus, variations that do not depart from the gist of the invention are intended to be within the scope of the invention. Such variations are not to be regarded as a departure from the spirit and scope of the invention.

## Claims

1. A plastisol composition, comprising a poly(vinyl chloride) polymer, at least one plasticizer, and an infrared-reflective pigment.

2. A plastisol composition according to claim 1, wherein the poly(vinyl chloride) polymer is a poly(vinyl chloride) homopolymer.

3. A plastisol composition according to claim 1, wherein the composition comprises at least one plasticizer selected from the group consisting of phthalates, azelates, butyrates, and epoxy plasticizers.

4. A plastisol composition according to claim 1, wherein the composition comprises a secondary plasticizer.

5. A plastisol composition according to claim 1, wherein the composition comprises 2,2,4-trimethyl-1 ,3-pentanediol monoisobutyrate.

6. A plastisol composition according to claim 1, wherein the composition comprises a sufficient amount of the infrared-reflective pigment so that there is essentially no transmittance of light of near infrared wavelength through a coating layer of a desired thickness formed from the plastisol composition.

7. A film prepared by applying to a substrate a plastisol composition comprising a poly(vinyl chloride) polymer, at least one plasticizer, and an infrared-reflective pigment and coalescing the applied composition to produce the film.

8. A film according to claim 7, wherein the film contains a sufficient amount of the infrared-reflective pigment so that there is essentially no transmittance of light of near infrared wavelength through the film.

9. A film according to claim 7, wherein the film is from about 1 mil to about 20 mils thick.

10. A film according to claim 7, wherein the film is flexible.

11. An article of architectural siding, comprising an outer coating layer comprising a poly(vinyl chloride) polymer, at least one plasticizer, and an infrared-reflective pigment.

12. An article of architectural siding according to claim 11, wherein the coating layer is from about 1 mil to about 20 mils thick.

13. An article of architectural siding according to claim 11, wherein the article of architectural siding is a vinyl article.

14. An article of architectural siding according to claim 11, wherein the article of architectural siding is an aluminum article.

15. A method of preparing an article of architectural siding, comprising steps of:
(a) forming a coating layer on a backing material by applying to the backing material a layer of a plastisol composition comprising a poly(vinyl chloride) polymer, at least one plasticizer, and an infrared-reflective pigment and fusing the applied plastisol layer into a coating layer with heat;
(b) removing the coating layer from the backing material and laminating the coating layer to a piece of architectural siding material; and
(c) shaping the piece of laminated architectural siding material into a desired profile.

16. An article of architectural siding formed according to the method of claim 15.

17. An article of architectural siding according to claim 16, wherein the article of architectural siding is a vinyl article.

18. An article of architectural siding according to claim 16, wherein the article of architectural siding is an aluminum article.

19. A coated article, comprising at least one coating layer comprising a poly(vinyl chloride) polymer, at least one plasticizer, and an infrared-reflective pigment.

20. An article having thereon a layer of a plasticized poly(vinyl chloride) polymer, the layer further including an infrared reflective pigment.

21. An article according to claim 21, wherein the article is a piece of vinyl siding or a trim piece for vinyl siding and the layer is an outer layer from about 2 mils to about 5 mils thick.

22. A method of protecting a building, comprising applying to the exterior of the building articles of architectural siding having an outer layer of a coating comprising an infrared reflective pigment.

23. A method according to claim 22, wherein the coating further comprises a poly(vinyl chloride) polymer and at least one plasticizer.
